# EUROPEAN PATENT SPECIFICATION

(11) **EP 3 611 296 B1**
(45) Date of publication and mention of the grant of the patent: **10.11.2021**
(21) Application number: 18827523.4
(22) Date of filing: 21.06.2018
(51) Int. Cl.: D04H 3/011, D04H 3/018, D04H 3/16, D04H 3/105, B60R 13/08, B32B 5/02, B32B 5/06, B32B 5/08, B32B 5/26

(54) **NON-WOVEN FABRIC IMPROVED IN WEIGHT REDUCTION AND SOUND ABSORPTION AND METHOD FOR MANUFACTURING SAME**
VLIESSTOFF MIT VERBESSERTER GEWICHTSREDUKTION UND SCHALLDÄMPFUNG UND VERFAHREN ZUR HERSTELLUNG DAVON
NONTISSÉ AMÉLIORÉ EN TERMES DE RÉDUCTION DE POIDS ET D'ABSORPTION SONORE ET SON PROCÉDÉ DE FABRICATION

(30) Priority: 07.07.2017 KR 20170086239
(43) Date of publication of application: 19.02.2020
(73) Proprietor: Kolon Industries, Inc., Seoul 07793 (KR)
(72) Inventor: CHO, Hee-jung, Seoul 07793 (KR); LEE, Min-ho, Seoul 07793 (KR); PARK, Young-shin, Seoul 07793 (KR); JUNG, Gyu-in, Seoul 07793 (KR); CHOI, Woo-seok, Seoul 07793 (KR); JANG, Jung-soon, Seoul 07793 (KR)
(74) Representative: Ter Meer Steinmeister & Partner
(86) International application number: PCT/KR2018/007014
(87) International publication number: WO 2019/009539

(56) References cited:
- JP-A- 2003 336 155
- KR-A- 20090 103 166
- KR-A- 20140 136 695
- KR-B1- 101 533 293
- DATABASE WPI Week 200333 Thomson Scientific, London, GB; AN 2003-350666 XP002800004, & KR 2003 0000746 A (DAEHAN SOLUTION CO LTD) 6 January 2003 (2003-01-06)
- DATABASE WPI Week 200951 Thomson Scientific, London, GB; AN 2009-K55909 XP002800005, & KR 100 902 180 B1 (NVH KOREA INC) 10 June 2009 (2009-06-10)
- ABDELFATTAH, A. MAHMOUD et al.: "Using Nonwoven Hollow Fibers to Improve Cars Interior Acoustic Properties", Life Science Journal, vol. 8, no. 1, 2011, pages 344-351, XP055592397,

## Description

### [TECHNICAL FIELD]

The present invention relates to a method for manufacturing a non-woven fabric with improved weight reduction and sound absorption by laminating a non-woven fabric made of ordinary polyester fibers having different melting points on both sides of a non-woven fabric made of hollow polyester fibers and ordinary polyester fibers having different melting points, and subjecting to thermal-bonding, and a non-woven fabric manufactured by the same method.

### [BACKGROUND ART]

In the vehicle manufacturing field, development is underway to reduce weight, reduce harmful substances, reduce production costs, and improve ride comfort. In recent years, domestic and international interest in harmful substances has increased, and regulations thereon have been strengthened.

Of the vehicle parts, an undercover product is a thin sheet-like part that is attached to the outermost layer of a vehicle floor. It is attached to the engine or the floor front depending on the vehicle model and is installed to protect vehicle floor devices against foreign materials generated from road surfaces, prevent the inflow of foreign materials, and achieve sound absorption or sound insulation of running noise.

In general, the undercover is composed of layers of different materials. It is usually composed of layers of woven fabric (external finish)/polypropylene film (PP film)/core (maintains the shape of the undercover and performs a sound absorption and sound insulation function)/nonwoven fabric (internal finish). The materials that make up each layer are stacked, laminated at high temperature and high pressure to make a plate shape, which is laminated and molded with other materials according to the mold shape for each vehicle model and the layer configuration of the product, thereby manufacturing a final product.

The development of materials for the core is underway from a first-generation of thermoplastic materials, a second-generation of glass fibers and polypropylene fibers, to a third-generation of polyester composite materials. The polyester composite material, a third-generation development product, is a product that is applied to the core by pressing and molding a non-woven fabric composed of two types of short fibers (PET, and PET that acts as an adhesive), which have advantages as materials capable of weight reduction, cost reduction, harmlessness to the human body, and recycling.

However, the non-woven fabric composed of short fibers has lower rigidity than glass fiber, which is an inorganic material, and thus lacks the properties of maintaining the shape. In order to prevent damage and deformation due to foreign substances, a large amount of binder must be added or surface finishing must be performed. However, there is a problem that binders and materials used for the surface finishing have problems, for example, they emit toxic gas at the time of a fire. Thus, there is a problem that the flame-retardant performance that should be inherent as a vehicle material, in particular as a material attached to the lower part of the engine, is insufficient.

In addition, the undercover polyester composite using a long fiber non-woven fabric has an advantage in terms of weight reduction, but it lacks the rigidity, sound absorption, and ability to prevent damage by external forces, and thus there is room for improvement.

In this regard, Korean Unexamined Patent Publication No. 10-2017-0002725 has proposed a method for manufacturing a vehicle underbody cover having light weight and excellent sound absorption and insulating performance while implementing high mechanical strength, in which an vehicle underbody cover is manufactured by forming a web from a reinforcing fiber (inorganic fiber or organic fiber) and a bicomponent polymer fiber (a thermoplastic resin having a melting point of 160 °C or more and a thermoplastic resin having a melting point of less than 200 °C), heat treating and drying the formed web to manufacture a composite sheet, and then stacking coating layers (a non-woven fabric, a heat-insulating skin material, a perforated sheet, etc.) on both sides of the sheet and mold-pressing the composite.

The invention disclosed in that publication has advantages in that the effect of improving the strength is obtained by increasing the dispersibility of fibrous particles, the strength is further improved by using a thermoplastic resin having a relatively high melting point, and at the same time, the elasticity is imparted and the density is low so that the weight reduction can be realized, but that invention has disadvantages in that in order to thermally bond the reinforcing fibers, the thermoplastic resin must be melted, and the melting point of the thermoplastic resin is relatively high, and thus heat treatment must be performed at a high temperature. Therefore, in this process, the thermoplastic resin and the organic fibers of the reinforcing fibers are melted, a space between the inorganic fibers is fully filled, and the sound absorption and insulating performance are deteriorated.

In addition, Korean Unexamined Patent Publication No. 10-2011-0056183 has proposed a method for manufacturing a thermoplastic composite material having high strength and light weight by laminating a reinforcing material on one side or both sides of an expanded molded product.

The invention disclosed in that publication has attempted to improve the strength, sound absorption, and weight reduction by heating the web consisting of a reinforcing fiber, a thermoplastic resin, and a heat-expandable particle to prepare an expanded molded product in which the reinforcing fiber and the heat-expandable particle are dispersed in the melt-solidified thermoplastic resin, then laminating a reinforcing material consisting of a reinforcing fiber and a binder (PP, PE) on one side or both sides of the expanded molded product, and press-heating the result so as to allow the reinforcing material to bond to the expanded molded product.

However, the above-described composite material causes problems in that the thickness is increased due to the expandable particles added for sound absorption, and that since the reinforcing material is laminated on the expanded molded product and bonded by press-heating, the expanded molded product is pressurized by press-heating and the porous shape is collapsed so that the sound absorption performance is lowered.

Korean Patent Application 2003-0000746 A discloses a nonwoven fabric suitable for use as a sound absorbing material for a car, having a top nonwoven layer comprising regular cross-section polyester fibers, flat cross-section polyester fibers and low melting point polyester binder fibers; a core nonwoven layer comprising flat cross-section polyester fibers, hollow conjugate fibers and low melting point polyester fibers; and a bottom nonwoven layer comprising regular cross-section polyester fibers, flat cross-section polyester fibers and low melting point polyester binder fibers.

As described above, a conventional vehicle undercover does not satisfy all of the strength, weight reduction, sound absorption performance, etc., and therefore, the final product is manufactured by laminating several layers of materials suitable for each performance, resulting in significant loss of cost and time. As a result, there is a need for ways to improve the above.

### [DETAILED DESCRIPTION OF THE INVENTION]

### [Technical Problem]

The present invention has been devised to solve the above-described problems, and an object thereof is to provide a non-woven fabric that can satisfy all of the mechanical strength, weight reduction, and sound absorption performance required for a vehicle undercover, and a method for manufacturing the same.

### [Technical Solution]

In order to achieve the above objects, one embodiment of the present invention provides a non-woven fabric, wherein
a sheath non-woven fabric in which 50 to 80 wt% of an ordinary polyester fiber 1'^{st} filament having a melting point of 255 °C or more is melt-mixed with 20 to 50 wt% of an ordinary polyester fiber 2'^{nd} filament having a melting point of 190 °C or less
is bonded on both sides of the core non-woven fabric in which 50 to 90 wt% of a hollow polyester fiber 1 ^{st} filament having a melting point of 255 °C or more is melt-mixed with 10 to 50 wt% of an ordinary polyester fiber 2^{nd} filament having a melting point of 190 °C or less.

Another embodiment of the present invention provides a method for manufacturing a non-woven fabric, including the steps of: spinning a polyester having a melting point of 255 °C or more to produce a hollow fiber 1 ^{st} filament; spinning a polyester having a melting point of 190 °C or less to produce an ordinary fiber 2^{nd} filament; web-laminating the 1^{st} filament and the 2^{nd} filament, needle-punching the web, and subjecting it to thermal-bonding to form a core non-woven fabric, wherein the first filament to the second filament = 50∼90 to 10∼50 wt%; spinning a polyester having a melting point of 255 °C or more to produce an ordinary fiber 1'^{st} filament; spinning a polyester having a melting point of 190 °C or less to produce an ordinary fiber 2'^{nd} filament; web-laminating the 1'^{st} filament and the 2'^{nd} filament, and subjecting them to thermal-bonding to form a sheath non-woven fabric wherein the 1'^{st} filament to the 2'^{nd} filament = 50∼80 to 20∼50 wt%; and laminating the sheath non-woven fabric on both sides of the core non-woven fabric and thermally bonding them by press-heating.

### [ADVANTAGEOUS EFFECTS]

Since the non-woven fabric according to the present invention forms a web from filaments made of hollow fibers and thus has high sound absorption performance even with a low weight, and the shape of the non-woven fabric may easily be formed by physical and thermal external forces, the filaments are not damaged and the mechanical strength is not lowered.

In addition, the layer structure and the manufacturing method of the non-woven fabric are simplified, and thus the workability and price competitiveness are excellent. Further, since polyester filaments having a low melting point are melted to bond polyester filaments having a high melting point, a chemical substance such as an adhesive is not required, and therefore it is possible to manufacture a non-woven fabric having a low amount of harmful substances.

### [BEST MODE FOR CARRYING OUT THE INVENTION]

The non-woven fabric according to the present invention is manufactured by the steps of spinning a polyester having a melting point of 255 °C or more to produce a hollow fiber 1 ^{st} filament, spinning a polyester having a melting point of 190 °C or less to produce an ordinary fiber (fiber fully filled without a cavity in the fiber cross-section, the same shall apply hereinafter) 2^{nd} filament, then web-laminating these filaments, needle-punching the web to entangle it, and subjecting it to thermal-bonding to produce a core non-woven fabric, and further, spinning a polyester having a melting point of 255 °C or more to produce an ordinary fiber 1'^{st} filament, spinning a polyester having a melting point of 190 °C or less to produce an ordinary fiber 2'^{nd} filament, then web-laminating these filaments, and subjecting them to thermal-bonding to produce a sheath non-woven fabric, and then laminating the sheath non-woven fabric on both sides of the core non-woven fabric and thermally bonding them by press-heating.

The hollow fiber 1^{st} filament is manufactured by a process in which a polyester having a melting point of 255 °C or more is supplied to an extruder and melted, and then the melt is discharged through spinneret orifices, solidified in cooling air, and stretched at a spinning speed of 4500∼5000 m/min using a high-pressure air stretching device so as to have fineness of 3 to 9 denier.

The discharge orifice can be specially designed to produce a hollow fiber in which a cavity is formed inside the 1 ^{st} filament. As the 1 ^{st} filament has a hollow cross-section, the sound absorption and weight reduction of the non-woven fabric can be improved. Since the manufacturing methods of such hollow fiber are techniques well-known in the art, a detailed description of the manufacturing method of the hollow fiber will be omitted here.

The 1'^{st} filament of polyester materials having a melting point of 255 °C or more and the 2^{nd} filament and the 2'^{nd} filament of polyester materials having a melting point of 190 °C or less are also manufactured by the method as described above. When the 1 ^{st} and 1'^{st} filaments and the 2^{nd} and 2'^{nd} filaments are less than 3 denier, the filament is thin, the strength is weak, and the number of filaments per unit area increases, so the sound absorption becomes worse. When the 1^{st} and 1'^{st} filaments and the 2^{nd} and 2'^{nd} filaments are more than 9 denier, the cooling length for crystallization of the filaments becomes long, and it is difficult to produce a non-woven fabric uniformly and commercially.

The non-woven fabric used as the core is configured so that the ratio of the 1^{st} filament of the hollow fiber and the 2^{nd} filament of the ordinary fiber is 50∼90 to 10∼50 wt% (1^{st} filament to 2^{nd} filament), and the non-woven fabric used in the sheath is configured so that the ratio of the 1'^{st} filament polyester of the ordinary fiber and the 2'^{nd} filament polyester polymer of the ordinary fiber is 50∼80 to 20∼50 wt% (1'^{st} filament to 2'^{nd} filament).

When the composition ratio of the 2^{nd} filament of the core nonwoven fabric is less than 10 wt%, the number of binding points between filaments is insufficient, and the rigidity required for vehicle undercover products is insufficient. When the composition ratio is more than 50 wt%, the proportion of the 1^{st} filaments serving as a framework to maintain the shape is reduced, which leads to a reduction in rigidity.

In addition, when the composition ratio of the 2'^{nd} filament of the sheath non-woven fabric is less than 20 wt%, there are few components that act as an adhesive and adhesion to the nonwoven fabric in the core does not improve, and it is difficult to manufacture in the form of a finished product. When the composition ratio is more than 50 wt%, the non-woven fabric is low in strength and thus is easily damaged by an external force.

The 2^{nd} and 2'^{nd} filaments are melted in a heating process described hereinafter, and the 1^{st} and 1'^{st} filaments are bound together. The reason why the minimum amount of the 2^{nd} filament of the sheath non-woven fabric is slightly higher than the minimum amount of the 2^{nd} filament of the core non-woven fabric is to further reinforce the adhesive force so that the 1'^{st} filament does not detach easily even if the sheath non-woven fabric supporting the core non-woven fabric on both sides is impacted by an external force.

At this time, the hollowness ratio of the 1^{st} filament (hollow area ratio relative to the total cross-sectional area including the hollow area) is preferably 20 to 50 %. The larger the hollowness ratio, the better the sound absorption function. However, when the hollowness ratio is more than 50 %, it is difficult to maintain the hollow shape during spinning, cutting of the filament cross-sectional shape is likely to occur, and the manufacture of the filament is difficult. When the hollowness ratio is less than 20 %, it is manufactured in the form of a general circular filament that is not hollow at the time of spinning. Alternatively, there is a problem that the hollow shape is easily deformed at each position of the filament due to the difference in the cooling rate between the outermost and the inside of the hollow filament.

These 1^{st} and 2^{nd} filaments (1'^{st} and 2'^{nd} filaments) are laminated in a web form on a conveyor in the form of blend spinning (matrix & binder) and passed through the heated calender roll to adjust the thickness. The basis weight of the non-woven fabric depends on the specification of the vehicle model applied, but the core non-woven fabric is preferably set to have a basis weight of 1000 to 1500 g/m² and the sheath non-woven fabric is preferably laminated in a web shape on the conveyer and thermally bonded so as to have a basis weight of 10 to 50 g/m².

More specifically, the core non-woven fabric is laminated in a web form on a conveyor, entangled between filaments by a needle punching process, and then passed through the calender roll heated to 180 to 210 °C, thereby allowing for thermal-bonding between the filaments while making the web smooth.

In addition, the sheath non-woven fabric is laminated in a web form on the conveyor and passed through a calender roll heated to 180 to 210 °C, thereby allowing for thermal bonding between the filaments. At this time, the thermal bonding can be performed using a calender roll in which the surface of the calender roll has one set of embossing shapes, one set of flat shapes, or a combination of one side embossing shape and the other side flat shape.

The sheath nonwoven fabric is laminated on both sides of the manufactured core non-woven fabric to form a layer, and then pressed and thermally bonded between hot plates at 190 °C to 220 °C which are lower than the melting temperature of the 1^{st} (1'^{st}) filament and higher than the melting temperature of the 2^{nd} (2'^{nd}) filament. As the 2^{nd} (2'^{nd}) filament is melted by heating and pressing, the 1^{st} and 1'^{st} filaments and the core non-woven fabric and the sheath non-woven fabric are thermally bonded to each other, thereby manufacturing a non-woven fabric having improved weight reduction and sound absorption. The non-woven fabric thus prepared is pre-heated and then put into a molding die, thereby manufacturing a vehicle undercover molded product having a desired shape.

### [DETAILED DESCRIPTION OF THE EMBODIMENTS]

Hereinafter, the present invention will be described in more detail by way of the following examples and comparative examples.

However, these examples are for illustrative purposes only and are not intended to limit the scope of the present invention. It will be apparent to those skilled in the art that varying substitutions and modifications may be made to the invention without departing from the scope and spirit of the present invention.

### <Examples 1~6> and <Comparative Examples 1~6>

First, in order to manufacture a core non-woven fabric, polyethylene terephthalates having melting points of 255 °C and 190 °C were respectively melted at 280 °C using a continuous extruder, and then each polyethylene terephthalate was spun into a 1 ^{st} filament (melting point of 255 °C) having a hollow shape (hollowness ratio of 30 %) and a 2^{nd} filament (melting point of 190 °C) having a general circular cross-sectional shape. The continuous filament discharged through a capillary nozzle was solidified in cooling air, and stretched at a spinning speed of 5000 m/min using a high-pressure air stretching device to produce a filament fiber. The discharge amount and the capillary nozzle size of the spinneret were adjusted so that the fineness of the final filament became 8 denier.

Next, the 1^{st} filament and the 2^{nd} filament prepared as above were mixed so that the mixing ratio thereof was 70:30 (wt%), and laminated in a web form on the conveyor net at a weight of 1300 g/m² per unit area by a conventional opening method, and then entangled by a needle punching process, and passed through a calender roll heated to 200 °C, thereby imparting smoothness and an appropriate thickness.

Next, the sheath non-woven fabric was manufactured. In the same manner as in the core non-woven fabric, the 1'^{st} filament (melting point of 255 °C) and the 2'^{nd} filament (melting point of 190 °C) having a general circular cross-sectional shape were spun and then mixed so that the mixing ratio of the 1'^{st} filament and the 2'^{nd} filament became 70:30 (wt%), laminated in a web form on the conveyor net at a weight of 20 g/m² per unit area, was and then passed through a calender roll consisting of a upper embossing roll and a lower flat roll and heated to 200 °C.

The sheath non-woven fabric was laminated on both sides of the manufactured core non-woven fabric and thermally bonded between hot plates pre-heated to 210 °C. This was molded in the form of a vehicle undercover (Example 1).

In the same manner as described above, the hollowness ratio and the mixing ratio of the respective filaments were adjusted as shown in Table 1 below to manufacture the nonwoven fabrics of Examples 2 to 6 and Comparative Examples 1 to 6.

**[Table 1]**

| Manufacturing condition of non-woven fabric | | | |
|---|---|---|---|
| Category | Hollowness ratio of 1^{st} filament of the core non-woven fabric (%) | Content ratio of 1^{st}:2^{nd} filaments of the core non-woven fabric (wt%) | Content ratio of 1^{st}:2^{nd} filaments of the sheath non-woven fabric (wt%) |
| Example 1 | 30 | 70:30 | 70:30 |
| Example 2 | 40 | 70:30 | 70:30 |
| Example 3 | 50 | 70:30 | 70:30 |
| Example 4 | 30 | 85:15 | 70:30 |
| Example 5 | 30 | 55:45 | 70:30 |
| Example 6 | 30 | 70:30 | 55:45 |
| Comparative Example 1 | 10 | 70:30 | 70:30 |
| Comparative Example 2 | 60 | 70:30 | 70:30 |
| Comparative Example 3 | 30 | 95:5 | 70:30 |
| Comparative Example 4 | 30 | 40:60 | 70:30 |
| Comparative Example 5 | 30 | 70:30 | 45:55 |
| Comparative Example 6 | 30 | 70:30 | 90:10 |

### <Test Example> Measurement of physical properties

The physical properties of the non-woven fabrics of the examples and comparative examples prepared as above were evaluated using the following evaluation method, and the results are shown in Table 2 below.

### (Evaluation Method)

### * Formation of a hollow of 1^{st} filament in the core non-woven fabric

- A cross-section of the stretched filament was evaluate with an optical microscope to confirm the formation of a hollow
- Evaluation criteria: ○ (hollow formation is good), × (hollow formation is poor)

### * Flexural strength

- MS341-23: ISO178 (Plastics-Determination of Flexural Properties) A method (test piece size 50 × 150 mm, test speed of 5 mm/min, span length of 100 mm)

### * Sound absorption rate

- MS341-23: evaluated using ALPHA CABIN equipment according to ISO 354 (Acoustics-Measurement of Sound Absorption in a Reverberation Room). The test was conducted with 840 × 840 mm flat plate test pieces without an edge frame.

### * Peeling strength

- The undercover molded product was subjected to a heat-resistant cycle treatment (140 ± 2 °C × 3 hours → room temperature × 1 hour → -40 ± 2 °C × 3 hours → room temperature × 1 hour → 40 ± 2 °C, 95 %RH × 15 hours → room temperature × 1 hour) and measured according to ASTM D1876 (stretching speed of 254 mm/min).

**[Table 2]**

| Evaluation results of physical properties of non-woven fabric | | | | |
|---|---|---|---|---|
| Category | Formation of a hollow of 1^{st} filament of the core non-woven fabric | Flexural strength MD/CD (N) | Sound absorption rate (at 5000 Hz) | Peel strength (kgf/25 mm) |
| MS341-23 Spec. | - | 17/19 or more | 0.48 or more | - |
| Example 1 | ○ | 25/27 | 0.36 | 2.8 |
| Example 2 | ○ | 22/23 | 0.30 | 2.7 |
| Example 3 | ○ | 23/22 | 0.28 | 2.7 |
| Example 4 | ○ | 18/20 | 0.37 | 2.2 |
| Example 5 | ○ | 26/28 | 0.35 | 2.4 |
| Example 6 | ○ | 21/22 | 0.34 | 3.1 |
| Comparative Example 1 | × | Manufacture of a core non-woven fabric is not possible | | |
| Comparative Example 2 | × | Manufacture of a core non-woven fabric is not possible | | |
| Comparative Example 3 | ○ | 12/11 | 0.36 | 1.8 |
| Comparative Example 4 | ○ | 11/10 | 0.34 | 2.4 |
| Comparative Example 5 | ○ | Manufacture of a sheath non-woven fabric is not possible | | |
| Comparative Example 6 | ○ | Bonding of a core non-woven fabric and a sheath non-woven fabric is not possible | | |

Looking at the results of Table 2, it can be seen that the non-woven fabric of the examples according to the present invention satisfies all of the mechanical properties and sound absorption properties required by the vehicle undercover plate compared to the comparative examples.

On close examination, when the hollowness ratio of the 1 ^{st} filament constituting the non-woven fabric was less than 20 % (Comparative Example 1), the hollow in the filament was not properly formed and the formed hollow was deformed. When the hollowness ratio was more than 50 % (Comparative Example 2), it was difficult to maintain the hollow shape and the cutting occurred, and the web formation of the core non-woven fabric was impossible.

Further, when the content of the 2^{nd} filament in the core non-woven fabric was less than 10 wt% (Comparative Example 3), the binding force for binding the 1^{st} filament was weak and the mechanical strength (flexural strength, peeling strength) was insufficient. When the content of the 2^{nd} filament was more than 50 wt% (Comparative Example 4), the proportion of the 1^{st} filament maintaining the shape of the non-woven fabric was relatively reduced, resulting in a reduction in flexural strength.

When the content of the 2'^{nd} filament in the sheath non-woven fabric was more than 50 wt% (Comparative Example 5), the proportion of the 1'^{st} filament was relatively decreased so the non-woven fabric did not maintain its proper shape. When the content of the 2'^{nd} filament was less than 20 wt% (Comparative Example 6), the sheath non-woven fabric did not properly bond with the core non-woven fabric and thus was not manufactured as a finished product for the vehicle undercover.

### [INDUSTRIAL APPLICABILITY]

The nonwoven fabric according to the present invention is excellent in mechanical strength and sound absorption rate, has a porous structure, and thus can be manufactured with a light weight. The non-woven fabric can exhibit optimized performance for a vehicle undercover plate. The manufacturing method of the non-woven fabric is simplified and thus the workability and price competitiveness are excellent. Thus, it can be usefully used in related industries.

## Claims

1. A non-woven fabric with improved weight reduction and sound absorption, wherein
a sheath non-woven fabric in which 50 to 80 wt% of an ordinary polyester fiber 1'^{st} filament having a melting point of 255 °C or more is melt-mixed with 20 to 50 wt% of an ordinary polyester fiber 2'^{nd} filament having a melting point of 190 °C or less is bonded on both sides of the core non-woven fabric in which 50 to 90 wt% of a hollow polyester fiber 1 ^{st} filament having a melting point of 255 °C or more is melt-mixed with 10 to 50 wt% of an ordinary polyester fiber 2^{nd} filament having a melting point of 190 °C or less.

2. The non-woven fabric with improved weight reduction and sound absorption according to claim 1, wherein a hollowness ratio of the 1^{st} filament is 20 to 50 %.

3. The non-woven fabric with improved weight reduction and sound absorption according to claim 1, wherein the 1^{st} filament, the 2^{nd} filament, the 1'^{st} filament, and the 2'^{nd} filament have fineness of 3 to 9 denier.

4. The non-woven fabric with improved weight reduction and sound absorption according to claim 1 wherein the core non-woven fabric has a basis weight of 1000 to 1500 g/m², and the sheath non-woven fabric has a basis weight of 10 to 50 g/m².

5. A method for manufacturing a non-woven fabric including the steps of:
spinning a polyester having a melting point of 255 °C or more to produce a hollow fiber 1 ^{st} filament;
spinning a polyester having a melting point of 190 °C or less to produce an ordinary fiber 2^{nd} filament;
web-laminating the 1 ^{st} filament and the 2^{nd} filament and needle-punching the web, and subjecting it to thermal-bonding to form a core non-woven fabric wherein the first filament to the second filament = 50∼90 to 10∼50 wt%;
spinning a polyester having a melting point of 255 °C or more to produce an ordinary fiber 1'^{st} filament;
spinning a polyester having a melting point of 190 °C or less to produce an ordinary fiber 2'^{nd} filament;
web-laminating the 1'^{st} filament and the 2'^{nd} filament, and subjecting them to thermal-bonding to form a sheath non-woven fabric wherein the 1'^{st} filament to the 2'^{nd} filament = 50∼80 to 20∼50 wt%; and
laminating the sheath non-woven fabric on both sides of the core non-woven fabric and thermally bonding them by press-heating.

6. The method for manufacturing a non-woven fabric according to claim 5, wherein the 1 ^{st} filament, the 2^{nd} filament, the 1'^{st} filament, and the 2'^{nd} filament are stretched at a spinning speed of 4500∼5000 m/min so as to have fineness of 3 to 9 denier.

7. The method for manufacturing a non-woven fabric according to claim 5, wherein the sheath non-woven fabric is thermally bonded and formed into an embossing or flat shape, and a web in which the 1^{st} filament and the 2^{nd} filament are laminated is passed through the calender roll heated at 180-210 °C to form a sheath non-woven fabric, which is then laminated so that the sheath non-woven fabric is bonded on both sides of the core non-woven fabric and pressed and heated to 190∼220 °C.

8. The method for manufacturing a non-woven fabric according to claim 5, wherein the core non-woven fabric has a basis weight of 1000 to 1500 g/m², and the sheath non-woven fabric has a basis weight of 10 to 50 g/m².

## Patentansprüche

1. Vliesstoff mit verbesserter Gewichtsreduzierung und Schallabsorption, wobei ein Mantelvliesstoff, in dem 50 bis 80 Gew.-% eines 1'. Filaments aus gewöhnlichen Polyesterfasern mit einem Schmelzpunkt von 255°C oder mehr mit 20 bis 50 Gew.-% eines 2'. Filaments aus gewöhnlichen Polyesterfasern mit einem Schmelzpunkt von 190°C oder weniger schmelzgemischt ist, auf beiden Seiten des Kernvliesstoffes, in dem 50 bis 90 Gew.-% eines 1. Filaments aus Polyesterhohlfasern mit einem Schmelzpunkt von 255°C oder mehr mit 10 bis 50 Gew.-% eines 2. Filaments aus gewöhnlichen Polyesterfasern mit einem Schmelzpunkt von 190°C oder weniger schmelzgemischt ist, gebunden ist.

2. Vliesstoff mit verbesserter Gewichtsreduktion und Schallabsorption nach Anspruch 1, wobei ein Hohlheitsverhältnis des 1. Filaments 20 bis 50% beträgt.

3. Vliesstoff mit verbesserter Gewichtsreduktion und Schallabsorption nach Anspruch 1, wobei das 1. Filament, das 2. Filament, das 1'. Filament und das 2'. Filament eine Feinheit von 3 bis 9 Denier aufweisen.

4. Vliesstoff mit verbesserter Gewichtsreduzierung und Schallabsorption nach Anspruch 1, wobei der Kernvliesstoff ein Flächengewicht von 1000 bis 1500 g/m² hat und der Mantelvliesstoff ein Flächengewicht von 10 bis 50 g/m² hat.

5. Verfahren zur Herstellung eines Vliesstoffes, umfassend die Schritte:
Spinnen eines Polyesters mit einem Schmelzpunkt von 255°C oder mehr, um ein 1. Filament aus Hohlfasern herzustellen;
Spinnen eines Polyesters mit einem Schmelzpunkt von 190°C oder weniger, um ein 2. Filament aus gewöhnlichen Fasern herzustellen;
Bahnlaminieren des 1. Filaments und des 2. Filaments und Vernadeln der Bahn und Unterziehen derselben einer thermischen Verklebung, um einen Kernvliesstoff zu bilden, wobei das erste Filament zu dem zweiten Filament = 50~90 bis 10~50 Gew.-%;
Spinnen eines Polyesters mit einem Schmelzpunkt von 255°C oder mehr, um ein 1'. Filament aus gewöhnlichen Fasern herzustellen;
Spinnen eines Polyesters mit einem Schmelzpunkt von 190°C oder weniger, um ein 2'. Filament aus gewöhnlichen Fasern herzustellen;
Bahnlaminieren des 1'. Filaments und des 2'. Filaments und Unterziehen derselben einer thermischen Verklebung, um einen Mantelvliesstoff zu bilden, wobei das 1'. Filament zu dem 2'. Filament = 50~80 bis 20~50 Gew.-%; und
Laminieren des Mantelvliesstoffes auf beide Seiten des Kernvliesstoffes und thermisches Verbinden derselben durch Presserhitzen.

6. Verfahren zur Herstellung eines Vliesstoffes nach Anspruch 5, wobei das 1. Filament, das 2. Filament, das 1'. Filament und das 2'. Filament mit einer Spinngeschwindigkeit von 4500~5000 m/min gestreckt werden, so dass sie eine Feinheit von 3 bis 9 Denier aufweisen.

7. Verfahren zur Herstellung eines Vliesstoffes nach Anspruch 5, wobei der Mantelvliesstoff thermisch gebunden und in eine Prägung oder eine flache Form geformt wird und eine Bahn, in der das 1. Filament und das 2. Filament laminiert sind, durch die auf 180-210°C erhitzte Kalanderwalze hindurchgeführt wird, um einen Mantelvliesstoff zu bilden, der dann laminiert wird, so dass der Mantelvliesstoff auf beiden Seiten des Kernvliesstoffes gebunden und gepresst und auf 190~220°C erhitzt wird.

8. Verfahren zur Herstellung eines Vliesstoffes nach Anspruch 5, wobei der Kernvliesstoff ein Flächengewicht von 1000 bis 1500 g/m² hat und der Mantelvliesstoff ein Flächengewicht von 10 bis 50 g/m² hat.

## Revendications

1. Tissu non-tissé avec une réduction de poids et une absorption du son améliorées, dans lequel
un tissu non-tissé de gaine dans lequel 50 à 80 % en poids d'un 1'^{er} filament de fibre de polyester ordinaire ayant un point de fusion de 255 °C ou plus est mélangé à l'état fondu avec 20 à 50 % en poids d'un 2'^{nd} filament de fibre de polyester ordinaire ayant un point de fusion de 190 °C ou moins, est lié des deux côtés du tissu non-tissé de coeur dans lequel 50 à 90 % en poids d'un 1^{er} filament de fibre de polyester creuse ayant un point de fusion de 255 °C ou plus est mélangé à l'état fondu avec 10 à 50 % en poids d'un 2^{nd} filament de fibre de polyester ordinaire ayant un point de fusion de 190 °C ou moins.

2. Tissu non-tissé avec une réduction de poids et une absorption du son améliorées selon la revendication 1, dans lequel un taux de creux du 1^{er} filament est de 20 à 50 %.

3. Tissu non-tissé avec une réduction de poids et une absorption du son améliorées selon la revendication 1, dans lequel le 1^{er} filament, le 2^{nd} filament, le 1'^{er} filament et le 2'^{nd} filament ont une finesse de 3 à 9 deniers.

4. Tissu non-tissé avec une réduction de poids et une absorption du son améliorées selon la revendication 1, dans lequel le tissu non-tissé de coeur a un grammage de 1 000 à 1 500 g/m², et le tissu non-tissé de gaine a un grammage de 10 à 50 g/m².

5. Procédé de fabrication d'un tissu non-tissé incluant les étapes consistant à :
filer un polyester ayant un point de fusion de 255 °C ou plus pour produire un 1^{er} filament de fibre creuse ;
filer un polyester ayant un point de fusion de 190 °C ou moins pour produire un 2^{nd} filament de fibre ordinaire ;
laminer le 1^{er} filament et le 2^{nd} filament pour obtenir un voile et aiguilleter le voile, et le soumettre à un liage thermique pour former un tissu non-tissé de coeur, dans lequel le premier filament jusqu'au second filament = 50 à 90 jusqu'à 10 à 50 % en poids ;
filer un polyester ayant un point de fusion de 255 °C ou plus pour produire un 1'^{er} filament de fibre ordinaire ;
filer un polyester ayant un point de fusion de 190 °C ou moins pour produire un 2'^{nd} filament de fibre ordinaire ;
laminer le 1'^{er} filament et le 2'^{nd} filament pour obtenir un voile, et le soumettre à un liage thermique pour former un tissu non-tissé de gaine, dans lequel le 1'^{er} filament jusqu'au 2'^{nd} filament = 50 à 80 jusqu'à 20 à 50 % en poids ; et
laminer le tissu non-tissé de gaine des deux côtés du tissu non-tissé de coeur et les lier thermiquement par chauffage sous pression.

6. Procédé de fabrication d'un tissu non-tissé selon la revendication 5, dans lequel le 1^{er} filament, le 2^{nd} filament, le 1'^{er} filament et le 2'^{nd} filament sont étirés à une vitesse de filage de 4 500 à 5 000 m/min de manière à avoir une finesse de 3 à 9 deniers.

7. Procédé de fabrication d'un tissu non-tissé selon la revendication 5, dans lequel le tissu non-tissé de gaine est thermiquement lié et formé pour obtenir un gaufrage ou une forme plate, et un voile dans lequel le 1^{er} filament et le 2^{nd} filament sont laminés est passé à travers le rouleau de calandrage chauffé à 180-210 °C pour former un tissu non-tissé de gaine, qui est ensuite laminé de sorte que le tissu non-tissé de gaine est lié des deux côtés du tissu non-tissé de coeur et pressé et chauffé à 190-220 °C.

8. Procédé de fabrication d'un tissu non-tissé selon la revendication 5, dans lequel le tissu non-tissé de coeur a un grammage de 1 000 à 1 500 g/m², et le tissu non-tissé de gaine a un grammage de 10 à 50 g/m².
